# EUROPEAN PATENT APPLICATION

(11) **EP 1 036 970 A2**
(43) Date of publication of application: **20.09.2000**
(21) Application number: 00301978.3
(22) Date of filing: 10.03.2000
(51) Int. Cl.: F16L 21/08, F16L 37/084

(54) **A push fit attachment**

(30) Priority: 17.03.1999 GB 9905994
(71) Applicant: DELTA CAPILLARY PRODUCTS LIMITED, London WC2B 6XF (GB)
(72) Inventor: Thomas, Philip, Madeley, Shropshire TF7 5AU (GB); Glaze, Alan Richard, Worcestershire B90 1EP (GB)
(74) Representative: Kinrade, John

(57) **Abstract**

A push fit attachment for connection to a pipe (A) push fitted into the attachment, the attachment comprising an outer tubular cover open at at least one end to receive the pipe and containing a grip ring (20) to grip the inserted pipe. The grip ring (20) has a cylindrical rim (30) and an annular array of teeth (34) in which each tooth (34) extends generally radially with respect to an axis of the annular array and with circumferential spacing (36) between adjacent teeth. Each tooth has a radially inner tip (44) comprising an edge (46) extending generally circumferentially, and the annular array is disposed in a generally frusto-conical array with a narrower end of the frustum of cone facing generally along a direction (Z) of insertion of a said pipe (A) through the grip ring from the open end of the cover. Within the frustum each tooth (34) has a main surface (42) facing in a general direction towards the open end of the cover. Each tooth has a said edge (46) comprising first and second longitudinal edge portions (48, 50, 54) and two points (60, 62) at an intersection of aforesaid edge portions. The second edge portion (54) forms a side of a scallop shaped notch (54) in the tooth at the tip (44) thereof and extending into tooth material radially outwards beyond each point (60, 62). At the tip (44) the tooth (34) is formed so that the points (60, 62) each extend out of said main surface (42) such that the point faces or points in a pointing direction (64 or 66) inwardly of the ring. The pointing direction (64 or 66) has a component of direction (68) opposite to the direction (Z) of tube insertion such that each point (60, 62) tends to dig into a said tube (A) when an attempt is made to withdraw the tube in the opposite direction to (Z) when the attachment is in use.

## Description

This invention relates to a push fit attachment for connection to a pipe push fitted into the attachment when the latter is in use.

Herein the term "pipe" can also include rods.

Push fit attachments are known comprising grip rings having resilient metal teeth extending generally radially of the ring and disposed in a frusto-conical array which admits a pipe push fitted into the ring in one direction but acts to resist withdrawal of the pipe in the opposite direction by radially inner tips of the teeth biting into the outer surface tube wall. Unfortunately on inserting the pipe, the teeth tips tend to bear strongly on the pipe creating quite high frictional resistance to pipe insertion and concomitant with that the teeth can cause quite deep and/or serious scratching or scoring of the pipe wall with the risk of causing excessively high amounts of undesirable debris and swarf which may also make the provision of fluid tight sealing around the pipe more likely to be defective.

An object of the invention is to provide a grip ring, and a push fit connector comprising such a grip ring, which can exert reduced interference on and cause less scratching or scoring of a pipe whilst the pipe is being inserted into the attachment, but can exhibit enhanced initial bite into the pipe (or resistance to pipe withdrawal) when an attempt is made to pull the pipe back out of the attachment.

According to the invention there is provided a push fit attachment for connection to a pipe push fitted into the attachment when the latter is in use, said attachment comprising a hollow outer cover open at at least one end for receiving a said pipe, when the attachment is in use, and a grip ring,
said grip ring comprising an annular array of teeth in which each tooth extends generally radially with respect to an axis of the annular array and with circumferential spacing between adjacent teeth, each said tooth having a radially inner tip comprising an edge extending generally circumferentially, and said annular array being disposed in a generally frusto-conical array with a narrower end of the frustum of cone facing generally along a direction of insertion of a said pipe through the grip ring from said open end of the cover, and within the frustum each said tooth having a main surface facing in a general direction towards said open end of the cover,
one or more of said teeth each having a said edge comprising first and second longitudinal edge portions and at least one point provided at an intersection of aforesaid edge portions, said second edge portion forming a side of a notch in the tooth at the tip thereof and extending into tooth material radially outwards beyond the or each said point, and at said tip the tooth being formed so that one or more of the points each extend out of said main surface such that the point faces or points in a pointing direction inwardly of the ring, and said pointing direction having a component of direction opposite to the direction of tube insertion such that the point tends to dig into a said tube when an attempt is made to withdraw the tube when the attachment is in use.

Preferably the notch is dimensioned for said second edge portion to dig into a said pipe during an attempted withdrawal thereof when the attachment is in use. In a radial direction the notch may have a maximum dimension which is a plurality of times less than a radial length of a said spacing alongside the tooth. The aforesaid notch dimension may be for example in the range of about five to about twelve times less, for example about eight times less. In any case, the notch may preferably be of only slight maximum dimension in a said radial direction.

The said tooth may have two said first edge portions spaced by said notch, and two said points each at a respective opposite side of an entrance to the notch.

If desired, the notch may be of a bight or scallop shape. Accordingly the second edge portion can be curved.

Where a said first edge portion and a said second edge portion intersect each may have at least a curved edge part, and a radius of curvature of the edge part of the second edge portion may be less than a radius of curvature of the edge part of the first edge portion.

The aforesaid two points on a said tooth may both lie on the same imaginary circle which is substantially centred on said axis.

In the case of the tooth having two said first edge portions spaced by said notch, then for each said first edge portion the first edge portion may have at least a curved edge part where the first edge portion is intersected by the said second edge portion, and the edge parts of the two said first edge portions may both lie along a common imaginary circle. That circle may be substantially centred on said axis.

A plurality of said teeth may each have at least one said point or a plurality of said points.

Aforesaid teeth may be formed of resilient metal. Said metal at an aforesaid tooth tip may be bent or otherwise deformed generally axially of the ring to provide the or a said point extending out of the said main surface.

If desired, radially outer parts of said teeth may be mounted on a radiused portion of a radially outer substantially circular rim.

The attachment may be provided with two or more said grip rings.

In one embodiment the attachment may be arranged for connecting two or more pipes together, when the attachment is in use.

If desired, an embodiment of the attachment may comprise a transverse wall part on said cover to block off an end of a pipe, when the attachment is in use.

The invention will now be further described, by way of example, with reference to the accompanying drawings in which:
**Figure 1** is a longitudinal section of a push fit attachment formed according to the invention, the attachment taking the form of a push fit connector for joining two pipes;
**Figure 2** is a front elevation of a grip ring used in the attachment in Figure 1;
**Figure 3** is a diagrammatic section on line III-III in Figure 2;
**Figure 4** is a fragment of a front elevation of the grip ring in Figure 2, but the fragment in Figure 4 being drawn to a larger scale than that used for the ring in Figure 2;
**Figure 5** is a diagrammatic section on line V-V in Figure 4 but to a larger scale than in Figure 4; and
**Figure 6** is a longitudinal section of another embodiment of a push fit attachment formed according to the invention, this embodiment taking the form of an end cover or cap to block off an end of a pipe.

In the drawings like references identify like or comparable parts.

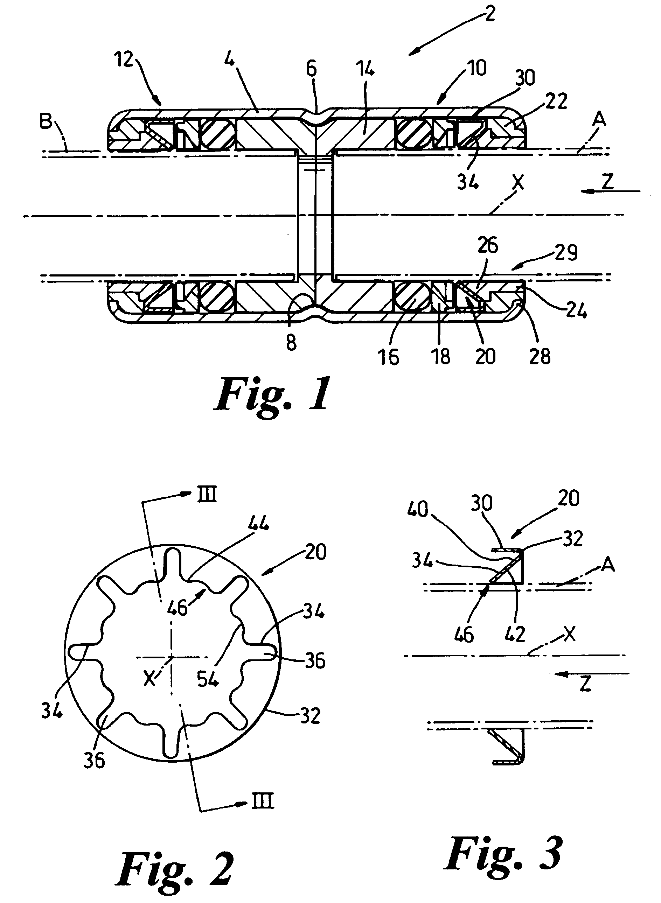

With reference to Figure 1 a push fit attachment in a form of a push fit pipe connector 2 is shown for joining ends of two pipes A and B shown in phantom lines. The connector 2 has a hollow tubular outer cover or body 4 which may be of metal, for example brass or copper, with a groove formed in the body to form an inwardly directed ridge 8. The connector 2 comprises a connecting portion 10 and another connecting portion 12 symmetrical with and similar thereto; the connecting portions 10 and 12 being intended to receive the pipes A and B respectively.

Since the connecting portion 12 is similar to the connecting portion 10 only the latter will be described in detail. To one side of the ridge 8, and within the body 4, the connecting portion 10 comprises an annular abutment element 14, an elastomeric sealing ring 16, an annular intermediate abutment element 18, a grip ring 20 and an outer bush 22 surrounding an axially displaceable sleeve 24 having an annular end lip 26 of wedge-shaped cross-section; the aforesaid components 14, 16, 18, 20, 22 and 24 being retained between the ridge 8 and a curved retaining end lip 28 on the body, which lip surrounds an open entrance end 29 to the attachment 2.

An axis or longitudinal axis of the body 4, pipes A and B, grab ring 20, and other aforesaid annular components all substantially coincide as the axis X.

Pipe A is inserted into the connecting portion 10 along direction Z.

The grip ring 20 has an outer substantially cylindrical rim 30 extending radially inwardly through a radiused part 32 to a plurality of teeth 34 each extending substantially radially inwardly, with respect to the centre of the ring and the axis X, and spaced one from another circumferentially by respective spacing 36 each extending substantially radially inwardly. The grip ring 20 is formed from stiff but resilient material, preferably a resilient metal, for example a steel.

The teeth 34 are in a substantially annular array and are also disposed in a frusto-conical array in which the narrower end of the frustum of cone faces generally along direction Z of the pipe insertion and away from the open end 29. Thus a main surface 40 of each tooth 34 on the outside of the frustum faces generally in direction Z away from the open end 29 whilst the opposite main surface 42 of each tooth faces generally in the opposite direction and towards the end 29.

Each tooth 34 has a radially inner tip 44 comprising a radially inner edge 46 comprising edge portions 48 and 50 and an edge portion 52 which is a side of a notch 54 in the tooth material at its tip at substantially the centre of the tip edge 46. The notch 54 separates the edge portion 48 from the edge portion 50 and is only of relatively slight maximum radial length and a plurality of times less than the radial length of each spacing 36.

Each notch 54 is of a bight or scallop shape, thus the edge portion 52 is curved or arcuate and intersects the edge portions 48 and 50 at respective edge parts 56 and 58 of the edge portion at points 60 and 62 of intersection.

The points 60 and 62 can be relatively sharp. They are disposed at opposite sides of the entrance to the corresponding notch 54.

Each of the edge parts 56 and 58 can be arcuate and may lie along a common imaginary circle 64 (shown in dashed line) substantially centred on the axis X on which circle the points 60 and 62 may also be substantially disposed. The radius of curvature of the arcuate edge 52 is less than the radius of curvature of each edge part 56 and 58. For each tooth 34, the two points 60 and 62 point along respective directions 64 and 66 which are not radial and intersect short of the axis X; the two points 60, 62 in an approximate sense face one another across the entrance to the corresponding notch 54.

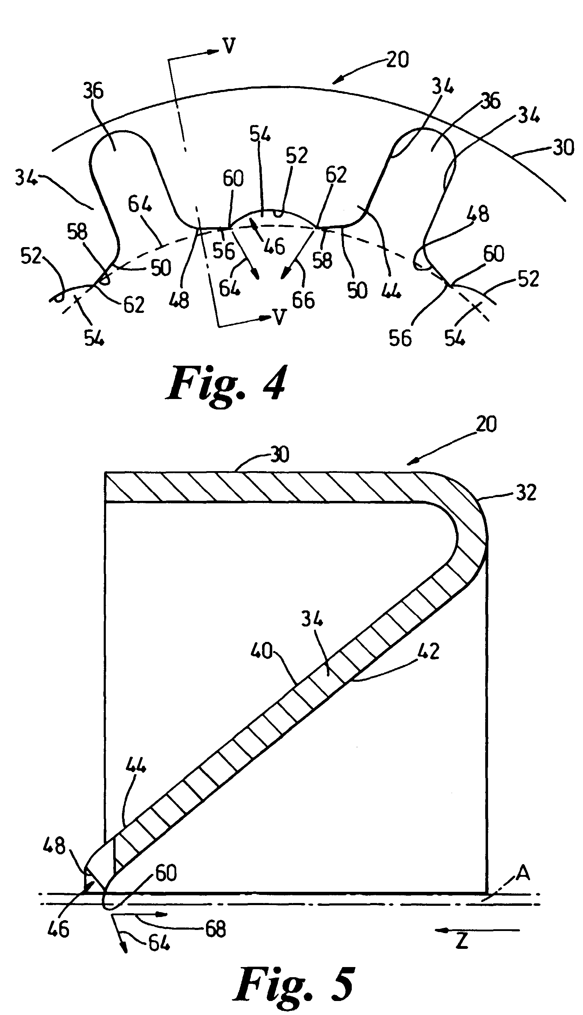

Also as indicated in Figure 5, the end pan 44 of each tooth is bent or otherwise deformed in general direction axially of the grip ring 20 opposite to the direction Z so the two points 60, 62, (only point 60) shown in Figure 5) each extend out of the main surface 42 of the tooth 34 such that the point faces or points in the pointing direction 64 which is inwardly of the ring but has a component 68 of direction opposite to the direction Z.

When the pipe A is inserted in the direction Z by push-fitting it into the connecting portion 10 it passes through the grip ring 20 whereat the points 60 and 62 on the teeth 34 contact the outer wall of the pipe and may only lightly scratch it. However when an attempt is made the pull pipe A out in a direction opposite to Z the points 60, 62 bite into the pipe wall causing the tooth edge 46 (see Figure 5) to be pulled radially inwardly closer to the pipe wall so the edge portions 48, 50 also bite into the pipe wall. Because the scallop shaped notches 54 are only slight radially, the edges 52 thereof can also bite into the pipe A due to the radial inward movement of the teeth 34.

To release pipe A from the connecting portion 10, it is necessary to push the sleeve 24 along direction Z inwardly of the pipe connector 2 whereby the wedge-shaped lip 26 acts on the frusto-conical array of the teeth 34 displacing then radially outwards away from the pipe wall.

The pipe connector 2 can connect the two pipes A and B. If desired the push fit attachment can be formed as pipe connector arranged to connect three or more pipes, for example T-shaped connectors or cross-shaped connectors.

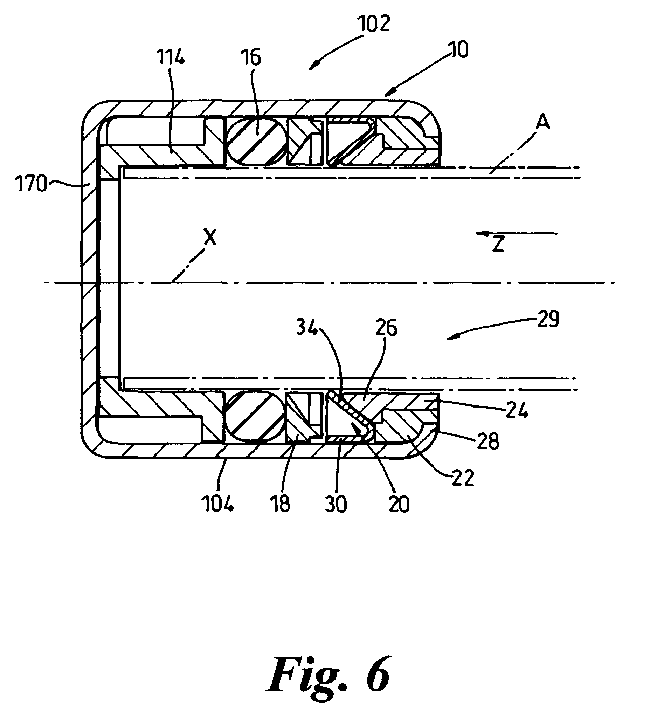

In Figure 6 the push fit attachment is an end cover or cap 102 having an outer body 104 and differing from the attachment 2 in that the cap 102 only comprises the connecting portion 10 open at the end 29 but closed at its opposite end by a wall 170 extending transversely across the body. Also in Figure 6, the connecting portion 10 includes a modified annular end abutment 114.

## Claims

1. A push fit attachment (2; 102) for connection to a pipe (A, B) push fitted into the attachment when the latter is in use, said attachment comprising a hollow outer cover (4) open at at least one end (29) for receiving a said pipe (A), when the attachment is in use, and a grip ring (20),
said grip ring (20) comprising an annular array of teeth (34) in which each tooth (34) extends generally radially with respect to an axis (X) of the annular array and with circumferential spacing (36) between adjacent teeth, each said tooth (34) having a radially inner tip (44) comprising an edge (46) extending generally circumferentially, and said annular array being disposed in a generally frusto-conical array with a narrower end of the frustum of cone facing generally along a direction (Z) of insertion of a said pipe (A) through the grip ring (20) from said open end (29) of the cover, and within the frustum each said tooth (34) having a main surface (42) facing in a general direction towards said open end (29) of the cover,
one or more of said teeth (34) each having a said edge (46) comprising first and second longitudinal edge portions (48, 50, 52) and at least one point (60, 62) provided at an intersection of aforesaid edge portions, said second edge portion (52) forming a side of a notch (54) in the tooth (34) at the tip (44) thereof and extending into tooth material radially outwards beyond the or each said point (60, 62), and at said tip the tooth being formed so that one or more of the points (60, 62) each extend out of said main surface (42) such that the point (60, 62) faces or points in a pointing direction (64, 66) inwardly of the ring, and said pointing direction (64) having a component of direction (68) opposite to the direction (Z) of tube insertion such that the point (60, 62) tends to dig into a said tube (A) when an attempt is made to withdraw the tube when the attachment is in use.

2. A push fit attachment as claimed in claim 1, in which the notch (54) is dimensioned for said second edge portion (52) to dig into a said pipe (A) during an attempted withdrawal thereof, when the attachment is in use.

3. A push fit attachment as claimed in Claim 1 or Claim 2, in which in a radial direction, the notch (54) has a maximum dimension which is a plurality of times less than a radial length of a said spacing (36) alongside the tooth (34).

4. A push fit attachment as claimed in any one preceding claim, in which the notch (54) is of slight maximum dimension in a said radial direction.

5. A push fit attachment as claimed in any one preceding claim, in which the second edge portion (52) is curved.

6. A push fit attachment as claimed in any one preceding claim, in which the notch (54) is of a bight or scallop shape.

7. A push fit attachment as claimed in any one preceding claim, in which the said tooth (34) has two said first edge portions (48, 50) spaced by said notch (54) and two said points (60, 62) each at a respective opposite side of an entrance to the notch.

8. A push fit attachment as claimed in claim 7, in which the said two points (60, 62) on a said tooth (34) both substantially lie on the same imaginary circle (64) which is substantially centred on said axis (X).

9. A push fit attachment as claimed in any one preceding claim, in which where a said first edge portion (48, 50)and a said second edge portion (52) intersect (60, 62) each has at least a curved edge part, and a radius of curvature of the edge part of the second edge portion (52) is less than a radius of curvature of the edge pan (56; 58)of the first edge portion (48; 50).

10. A push fit attachment as claimed in any one preceding claim, in which said tooth (34) has two said first edge portions (48, 50) spaced by said notch (54), each of those two first edge portions has at least a curved edge part (56, 58) where the first edge portion (48; 50) is intersected (60, 62) by the second edge portion (52), and the edge parts (56, 58) of the two said first edge portions both lie along a common imaginary circle (64).

11. A push fit attachment as claimed in claim 10, in which said common imaginary circle (64) is substantially centred on said axis (X).

12. A push fit attachment as claimed in any one preceding claim, in which a plurality of said teeth (34) each has a plurality of said points (60, 62).

13. A push fit attachment as claimed in any one of claims 1 to 6, in which a plurality of said teeth (34) each has at least one said point (60, 62).

14. A push fit attachment as claimed in any one preceding claim, in which aforesaid teeth (34) are formed of resilient metal.

15. A push fit attachment as claimed in claim 14, in which said metal at a said tooth tip (34) is bent or otherwise deformed generally axially of the ring to provide the or a said point (60, 62) extending out of the main surface (42).

16. A push fit attachment as claimed in any one preceding claim, in which radially outer parts of said teeth (34) are mounted on a radiused portion (32) of a radially outer substantially circular rim (30).

17. A push fit attachment as claimed in any one preceding claim, in which there are two or more said grip rings (20).

18. A push fit attachment (2) as claimed in any one preceding claim, in which said attachment is arranged (10, 12) for connecting two or more pipes (A, B) together when the attachment is in use.
